# EUROPÄISCHE PATENTSCHRIFT

(11) **EP 0 804 701 B1**
(45) Veröffentlichungstag und Bekanntmachung des Hinweises auf die Patenterteilung: **19.08.1998**
(21) Anmeldenummer: 96900596.6
(22) Anmeldetag: 18.01.1996
(51) Int. Cl.: F16L 37/12

(54) **SCHNELLANSCHLUSSKUPPLUNG**
RAPID CONNECTION COUPLING
RACCORD RAPIDE

(30) Priorität: 19.01.1995 DE 29500808 U
(43) Veröffentlichungstag der Anmeldung: 05.11.1997
(73) Patentinhaber: WEH GmbH, VERBINDUNGSTECHNIK, D-89257 Illertissen (DE)
(72) Erfinder: WEH, Wolfgang, D-89257 Illertissen (DE); WEH, Erwin, D-89257 Illertissen (DE)
(74) Vertreter: Fiener, Josef
(86) Internationale Anmeldenummer: EP9600205
(87) Internationale Veröffentlichungsnummer: WO9622488

(56) Entgegenhaltungen:
- EP-A- 0 340 879
- FR-A- 2 314 431
- GB-A- 1 104 697

## Beschreibung

Die Erfindung betrifft eine Schnellanschlußkupplung für die Übertragung von gasförmigen und/oder flüssigen Fluiden, insbesondere zum Füllen von Kühlmitteln bei Klimaanlagen.

Mit derartigen Schnellanschlußkupplungen soll eine sichere, dichte sowie schnell anschließbare Steckkupplung zum Übertragen eines Fluids von einer Druckquelle, beispielsweise von einer Nachfüllflasche aus erreicht werden. Besonders wichtig ist hierbei die einfache, problemlose Bedienbarkeit der Schnellanschlußkupplung, so daß auch bei ungünstigen Bedingungen, wie gefährlichen Fluiden oder bei hohen Anschlußdrücken eine problemlose Handhabung ermöglicht wird.

Eine derartige Schnellanschlußkupplung ist in der EP-A-0 340 879 beschrieben, wobei die Schnellanschlußkupplung ein Gehäuse mit einem Fluideinlaß und einem Fluidauslaß aufweist, sowie mehrere Ventile vorgesehen sind, um eine sichere Abdichtung der Schnellanschlußkupplung bis zur vollständigen Herstellung der Verbindung zu gewährleisten. Diese Ventile werden dabei nach Ansetzen der Schnellanschlußkupplung in einer bestimmten vorgegebenen Reihenfolge geschaltet, wobei zuerst durch das Aufschieben der Schnellanschlußkupplung an einen Anschlußnippel das Auslaßventil geöffnet wird, dann bei weiterer Bewegung eines Steuerungshebels die Spannzangen geschlossen werden und schließlich das Einlaßventil geöffnet wird. Der Steuerungshebel ist hierbei über eine Exzenterwelle mit der Schiebehülse für die Beaufschlagung der Spannzangen und mit einem zentralen Dichtkolben in Eingriff, der auch den Fluideinlaß nach erfolgtem Anschluß der Steckkupplung freigibt. Obwohl hierdurch eine besonders sichere Anschlußmöglichkeit geschaffen wird, ist der Aufbau dieser Kupplung aufgrund der Vielzahl der Bauteile relativ aufwendig. Zudem ist die Handhabung relativ kompliziert, da neben dem Aufstecken der Kupplung das Betätigen des Steuerungshebels erforderlich ist, so daß eine Einhand-Bedienung kaum möglich ist.

Aus der WO-A-93/20378 des Anmelders ist weiterhin ein derartiger Schnellanschluß, insbesondere zum Füllen von Gasflaschen bekannt, wobei im Bereich des Auslasses eine Schnellanschlußvorrichtung in Form von Spannzangen mit einem Eingriffprofil vorgesehen ist. Hierbei ist auch ein in dem Kupplungsgehäuse gleitend verschiebbarer, hohler Dichtkolben beschrieben, der über eine mit einer Schiebehülse verbundenen Betätigungseinrichtung für das Schließen bzw. Öffnen der Spannzangen verbunden ist. Auch hier ist ein gesondertes Betätigen der Betätigungseinrichtung in Form eines Hebels erforderlich, so daß die Handhabung dieses Schnellanschlusses ebenfalls verbesserungsfähig ist.

Demzufolge liegt der Erfindung die Aufgabe zugrunde, eine Schnellanschlußkupplung der eingangs genannten Art zu schaffen, die bei einfachem Aufbau eine sichere und besonders einfache Handhabung ermöglicht.

Diese Aufgabe wird gelöst durch eine Schnellanschlußkupplung gemäß den Merkmalen des Anspruches 1. Bevorzugte Weiterbildungen der Erfindung sind Gegenstand der Unteransprüche.

Die vorgeschlagene Schnellanschlußkupplung zeichnet sich durch eine geringe Komponentenanzahl, einfache Herstellung, sowie eine besonders einfache Bedienung aus, die zudem besonders sicher ist. Insbesondere für die bevorzugte Ausführungsform zur Befüllung von Klimaanlagen mit Kühlmitteln wird hierbei beim Anschluß bzw. beim Lösen der Schnellanschlußkupplung sicher vermieden, daß das Gas oder flüssige Kühlmittel austreten kann. Dies ist insbesondere aus Umweltschutzgründen wichtig, da bei derartigen Klimaanlagen häufig noch FCKW-Kühlmittel verwendet werden. Bei den heute gebräuchlichen Anschlußkupplungen geht bei jedem Füllvorgang noch ein erhebliches Gasvolumen verloren, das sich im Schlauch zwischen der Nachfüll-Gasflasche und der Anschlußkupplung befindet und beim An- bzw. Abkuppeln entweichen kann.

Es sei darauf hingewiesen, daß sich die vorgeschlagene Schnellanschlußkupplung für verschiedene Anschlüsse eignet, insbesondere für Anschlußnippel mit einem Außengewinde. Zum Anschluß der Kupplung können jedoch auch andere Profilformen wie Einstiche oder Wülste an dem Anschlußnippel vorgesehen sein, wobei die gegenüberliegende Spannzangenform korrespondierend ausgebildet ist. Durch den im Gehäuse gleitend verschiebbaren Dichtkolben wird hierbei ein sicherer Eingriff der Spannzangen ermöglicht, da sich durch die geringfügige Verschiebbarkeit des Dichtkolbens das Eingriffsprofil der Spannzangen automatisch an die Gewindegänge oder entsprechende formschlüssige Eingriffsprofile anpaßt. Dies ist insbesondere deshalb wesentlich, da hierdurch der entsprechende Anschlußnippel, z. B. für eine Klimaanlage relativ einfach aufgebaut werden kann, und dennoch durch die geringfügige Axialbeweglichkeit des Dichtkolbens zwischen dem Eingriffsprofil der Spannzangen und der Abdichtfläche die Schnellanschlußkupplung sicher in das Anschlußprofil des Anschlußnippels eingreift. Damit wird auch ein übermäßiger Verschleiß oder eine Beschädigung des Anschlußprofiles sowohl kupplungs- als auch nippelseitig sicher vermieden.

Von besonderer Bedeutung ist die Realisierung der Schnellanschlußkupplung mittels einer äußeren Schiebehülse, so daß auf besonders einfache Weise eine sichere und schnelle Einhand-Bedienung der Schnellanschlußkupplung ermöglicht wird.

Nachfolgend wird ein Ausführungsbeispiel anhand der beiliegenden Zeichnungen näher erläutert und beschrieben. Hierin zeigen:
- Fig. 1: eine Seitenansicht einer Schnellanschlußkupplung für einen Anschlußnippel mit einem Außengewinde als Anschlußprofil, wobei die Schnellanschlußkupplung im Längs-Halbschnitt und in der Stellung kurz vor dem Anschluß dargestellt ist;
- Fig. 2: eine ähnliche Darstellung der Schnellanschlußkupplung, jedoch in vollständig angeschlossener Stellung an den Anschlußnippel.

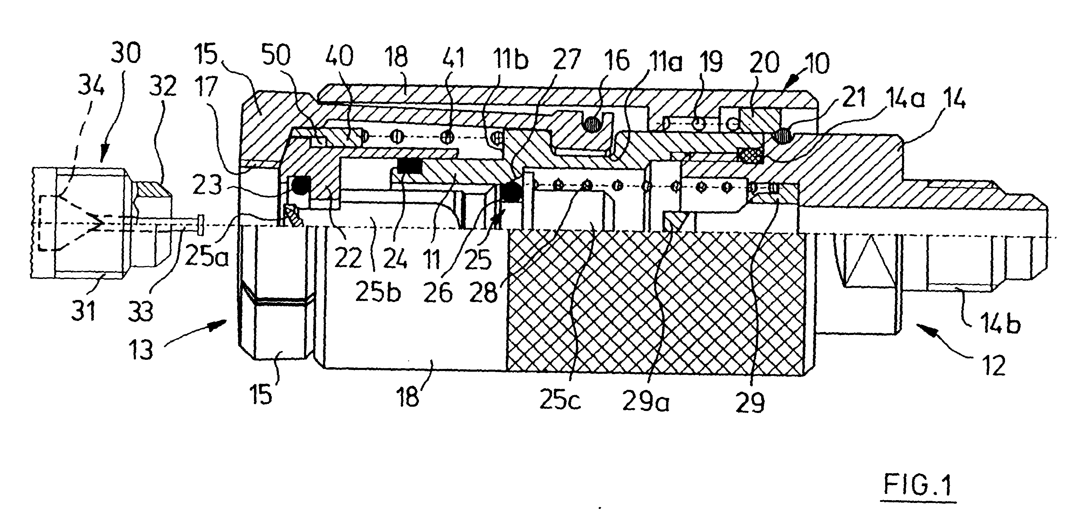

In Fig. 1 ist ein bevorzugtes Ausführungsbeispiel einer Schnellanschlußkupplung 10 kurz vor dem Anschluß an einen Anschlußnippel 30 gezeigt. Die Schnellanschlußkupplung 10 weist ein rohrförmiges Gehäuse 11 auf, wobei hier die rechte Stirnseite als Einlaß 12 dient und die linke Stirnseite als Auslaß 13 für die Weiterleitung des zu übertragenden Fluids an den Anschlußnippel 30. Der Einlaß 12 zu dem Gehäuse 11 weist einen Anschlußadapter 14 auf, der in das Gehäuse 11 eingeschraubt und über eine Dichtung 14a gegen das Gehäuse 11 abgedichtet ist. Der Anschlußadapter 14 weist an seinem hier rechten Ende zudem ein Gewinde 14b auf, an das ein Schlauch oder eine Rohrleitung zur Zuführung des zu übertragenden Fluids angeschlossen werden kann. Der Anschlußadapter 14 kann hierbei in Anpassung an das zu übertragende Fluid, insbesondere an die jeweils gewünschten Zuführwinkel, Durchlaßquerschnitte usw. gestaltet sein.

Auf der dem Anschlußadapter 14 gegenüberliegenden Stirnseite, hier dem Auslaß 13 sind mehrere, in Rohrform angeordnete, längliche Spannzangen 15 vorgesehen, die in der hier dargestellten Stellung kurz vor dem Aufstecken auf den Anschlußnippel 30 radial nach außen aufgespreizt sind, wie dies beispielsweise auch in der vorstehend genannten WO-A-93/20378 dargestellt ist. Die länglichen Spannzangen 15, von denen um das Gehäuse 11 herum wenigstens drei, im allgemeinen sechs Spannzangen angeordnet sind, sind an ihrem hier rechten Ende an einer Ringnut lla des Gehäuses 11 eingehängt und dabei durch eine Ringfeder 16 vorgespannt, so daß die Spannzangen 15 radial nach außen aufgespreizt werden. An dem hier linken Ende an der nach innen abgekröpftem Fläche weisen die Spannzangen 15 jeweils korrespondierend zu dem Anschlußprofil 31 des Anschlußnippels 30 ausgebildete formschlüssige Eingriffsprofile 17 auf, so daß bei der Ausführung mit einem Außengewinde am Anschlußnippel 30 ein entsprechend ausgebildetes Innengewinde an den radial nach innen gerichteten Flächen des Eingriffsprofils 17 gegenüberliegt.

Um die Spannzangen 15 herum ist eine äußere Schiebehülse 18 vorgesehen, die an dem zylindrischen Außenmantel des Gehäuses 11 geführt ist und mit einer relativ schwachen Druckfeder 19 in Richtung des Anschlußnippels 30 vorgespannt ist. Die Druckfeder 19 stützt sich hierbei über einen Abstützring 20 und einen Federring 21 an dem Anschlußadapter 14 bzw. dem Gehäuse 11 ab.

An der zum Auslaß 13 hin gelegenen Umfangsfläche des Gehäuses 11 ist ein Dichtkolben 22 geführt, der an seiner vorderen Stirnseite einen Dichtring 23 zur Anlage an einer konisch ausgeführten Dichtfläche 32 des Anschlußnippels 30 aufweist. Der Dichtkolben 22 ist gegenüber den Spannzangen 15 mittels eines am vorderen Ende des Gehäuses 11 eingesetzten Dichtungsringes 24 abgedichtet, so daß das im wesentlichen entlang der Zentralachse der Steckanschlußkupplung 10 strömende gasförmige und/oder flüssige Fluid nicht nach außen hin austreten kann.

Von wesentlicher Bedeutung ist weiterhin ein zentral im Gehäuse 11 gelagertes Rückschlagventil 25, das mittels eines Dichtringes 26 gegenüber einer Dichtfläche 27 an dem Gehäuse 11 in. geschlossener Stellung abdichtet. Das Rückschlagventil 25 ist hierbei von einer Druckfeder 28 beaufschlagt, die mittels eines Zentriereinsatzes 29 im Anschlußadapter 14 geführt ist und sich gegen letzteren abstützt. Durch dieses Rückschlagventil 25 wird sichergestellt, daß in der hier dargestellten abgekuppelten Position bzw. bis kurz vor dem Anschluß der Schnellanschlußkupplung 10 an den Anschlußnippel 30 das durch den Anschlußadapter 14 zugeführte Fluid auch bei geöffneten Anschlußhahn an der Nachfüllflasche oder dergleichen nicht ausströmen kann.

Das Rückschlagventil 25 weist einen zentral angeordneten, zum Auslaß 13 hin weisenden Ventilstößel 25b auf, der am vorderen Ende eine konische Zentriervertiefung 25a aufweist. Beim Aufstecken der Schnellanschlußkupplung 10 auf den Anschlußnippel 30 wirkt diese Zentriervertiefung 25a mit einem aus dem Anschlußnippel 30 herausragenden Stift 33 zusammen, wobei letzterer beim Anschließen entlang der Anschlußnippel-Achse eingedrückt wird und hierbei ein strichliert dargestelltes Rückschlagventil 34 betätigt. Das Rückschlagventil 25 der Schnellanschlußkupplung 10 weist weiterhin einen dem Zentriereinsatz 29 gegenüberliegenden Schaft 25c auf, der zum einen der Führung der Druckfeder 28 dient und zusammen mit einem Anschlag 29a des Zentriereinsatzes 29 den Axialhub des Rückschlagventils 25 begrenzt.

Von besonderer Bedeutung ist hierbei ein am Außenumfang des Dichtkolbens 22 geführter Schiebering 40, der von einer Druckfeder 41 beaufschlagt ist. Die Druckfeder 41 stützt sich hierbei an einem Bund 11b des Gehäuses 11 ab. Wie aus der Darstellung ersichtlich, greift die zum Auslaß 13 hin weisende, flach ausgebildete Seite des Schieberings 40 an der Innenfläche der Spannzangen 15 an, wodurch diese in ihrer radial aufgespreizten Öffnungsstellung gehalten werden. Der Schiebering 40 wird hierbei von der.Druckfeder 41 bis zu dem nach innen hin abgekröpftem Bereich der Spannzangen 15 geschoben, wodurch zugleich ein Anschlag der Verschiebebewegung des Schieberinges 40 auf dem Dichtkolben 22 erreicht wird. Da der Dichtkolben 22 je nach Lage und Eingriffsbedingungen des Eingriffsprofils 17 in das gegenüberliegende Profil 31 des Anschlußnippels 30 geringfügig axial verschiebbar ist, ist zwischen Schiebering 40 und dem Dichtkolben 22 ein abgestuftes Mitnehmerprofil 50 vorgesehen, daß eine gewisse relative Axialbeweglichkeit dieser beiden Bauteile zueinander ermöglicht.

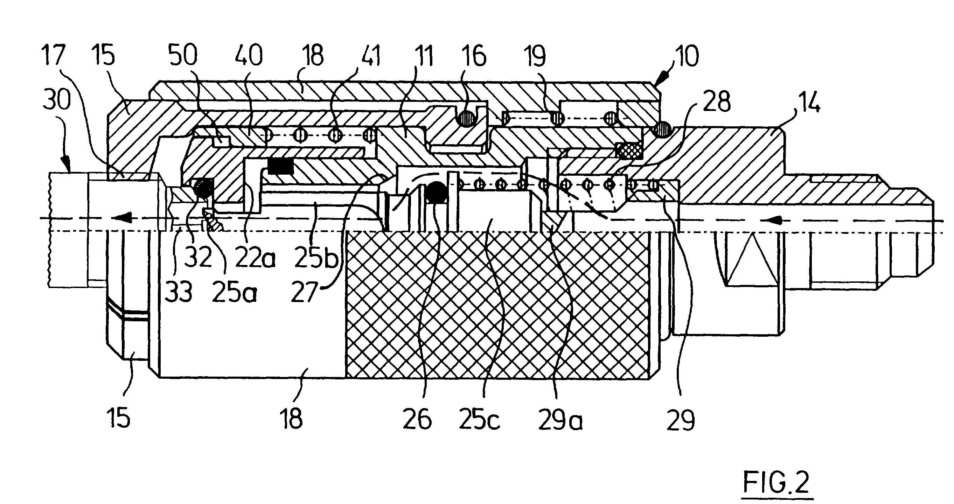

In Fig. 2 ist die Anschlußstellung der Schnellanschlußkupplung dargestellt. Wie ersichtlich, wird beim Aufstecken der Schnellanschlußkupplung 10 auf den Anschlußnippel 30 die Zentriervertiefung 25a mit dem aus dem Anschlußnippel 30 herausragenden Stift 33 in Berührung gebracht, wobei sich diese je nach Federauslegung im wesentlichen simultan in entgegengesetzte Richtung bewegen. Ebenso gelangt der Dichtring 23 in Anlage zu der Dichtfläche 32, wodurch ein Austreten von Fluid, das gegebenenfalls an dem Rückschlagventil 34 des Anschlußnippels 30 ansteht, vermieden wird. Durch die Anlage des Dichtringes 23 an der Dichtfläche 32 wird zudem der Dichtkolben 22 nach rechts verschoben, bis der am Außenumfang abstehende Bund im Bereich des Mitnehmerprofiles 50 in Berührung mit dem Schiebering 40 gelangt. Dadurch wird der Dichtkolben 22 zusammen mit dem Schiebering 40 gegen die Federkraft der Druckfeder 41 nach rechts verschoben. Nach einem geringen Weg von einigen Millimetern werden die an der Außenfläche des Schieberinges 40 anliegenden Innenflächen der Spannzangen 15 aus ihrer Sperrstellung frei, so daß diese nach innen schnappen können und somit das Eingriffsprofil 17 an dem korrespondierend ausgebildeten Anschlußprofil 31 des Anschlußnippels 30 eingreift. Hierdurch wird praktisch zeitgleich die Schiebehülse 18 für die axiale Bewegung nach links frei, da die Schiebehülse 18 von der Druckfeder 19 beaufschlagt wird. Durch die Axialbewegung der Schiebehülse 18 greift diese über die radial äußeren Enden der Spannzangen 15, so daß diese in ihrer Eingriffsstellung am Anschlußnippel 30 formschlüssig gehalten werden.

Es sei darauf hingewiesen, daß in der hier in Fig. 2 dargestellten Anschlußstellung der Dichtkolben 22 im Millimeterbereich axial beweglich ist. Von wesentlicher Bedeutung ist hierbei eine Kolben-Ringfläche 22a, die eine größere wirksame Fläche als im Bereich der Berührungsfläche zwischen dem Dichtring 23 und der Dichtfläche 32 aufweist. Hierdurch wird sichergestellt, daß gemäß der strichliert dargestellten Fluidströmung im wesentlichen entlang der Zentralachse der Schnellanschlußkupplung 10 der Dichtkolben 22 mit seinem Dichtring 23 mit steigendem Druck auch stärker gegen die Dichtfläche 32 angedrückt wird. Hierdurch wird eine Servowirkung, d. h. eine stärkere Anpresskraft des Dichtringes 23 mit steigendem Fluiddruck und damit eine besonders zuverlässige Abdichtung der Schnellanschlußkupplung 10 erreicht.

Zum Lösen der Schnellanschlußkupplung 10 und damit dem Zurückführen der in Fig. 2 dargestellten Anschlußstellung in die Öffnungsstellung gemäß Fig. 1 wird die Schiebehülse 18 an einer Riffelung oder entsprechenden Profilierung an der Außenfläche per Hand zurückgezogen. Nach einem kurzen Weg können die Spannzangen 15 sich wieder radial nach außen aufspreizen, wobei simultan der Schiebering 40 unter der Wirkung der Druckfeder 41 hier nach links zum Auslaßende 13 hin verschoben wird. Aufgrund des Axialspieles im Bereich des Mitnehmerprofiles 50 kann diese Vorschnellbewegung des Schieberings 40 unabhängig von der sicheren Anlage des Dichtkolbens 22 mit seinem Dichtring 23 erfolgen. Bevor sich somit der Dichtkontakt zwischen dem Dichtkolben 22 und der Dichtfläche 32 löst, wird zudem aufgrund des Axialspieles des Ventilstößels 25b gegenüber der als Anschlagfläche dienenden Kolben-Ringfläche 22a das Rückschlagventil 25 geschlossen und ebenso dem Stift 33 erlaubt, wieder nach außen herauszuragen, so daß auch das Rückschlagventil 34 des Anschlußnippels 30 simultan geschlossen wird. Durch diese praktisch gleichzeitige Abfolge wird ein sehr schnelles Schließen der Rückschlagventile erreicht, so daß kein Fluidvolumen austreten kann. Hierbei ist insbesondere die Gestaltung des Schieberinges 40 von Bedeutung, da durch das zum Auslaß 13 hin weisende Ende die Aufspreizbewegung der Spannzangen 15 unterstützt wird, so daß das Lösen der Schnellanschlußkupplung praktisch schlagartig erfolgt, so daß Beschädigungen des Eingriffsprofils 17 bzw. des Anschlußprofiles 31 vermieden werden. Der Schiebering 40 erlaubt zudem ein sicheres Aufstecken der Schnellanschlußkupplung 10 auf den Anschlußnippel 30, wobei die Spannzangen 15 erst geschlossen werden, wenn der Dichtkontakt zwischen Dichtfläche 32 und Dichtring 23 sichergestellt ist, da die Öffnungsstellung der Spannzangen 15 so lange aufrechterhalten wird, bis von der Axialverschiebung des Dichtkolbens 22 und der hieraus abgeleiteten Mitnahme des Schieberings 40 in direkter Reihenfolge die Öffnungsstellung der Spannzangen 15 gelöst wird, um praktisch schlagartig den Anschluß herzustellen.

## Patentansprüche

1. Schnellanschlußkupplung (10) für die Übertragung von gasförmigen und/oder flüssigen Fluiden, insbesondere zum Füllen von Kühlmitteln bei Klimaanlagen, umfassend:
- ein rohrförmiges Gehäuse (11);
- eine gegenüber dem Gehäuse (11) verschiebbar gelagerte, äußere Schiebehülse (18);
- mehrere am Gehäuse (11) befestigte, radial aufspreizbare Spannzangen (15) mit einem Eingriffsprofil (17) zum Anschluß an einen korrespondierend ausgebildeten Anschlußnippel (30); und
- einen zentral im Gehäuse (11) gleitend verschiebbaren Dichtkolben (22) zur Anlage an den Anschlußnippel (30);
dadurch gekennzeichnet, daß
zwischen dem Dichtkolben (22) und den Spannzangen (15) ein unabhängig axial verschiebbarer, federbeaufschlagter Schiebering (40) angeordnet ist, der in abgekuppelter Position der Steckanschlußkupplung (10) an den Spannzangen (15) angreift und diese in Öffnungsstellung hält, sowie bei der Ankuppelbewegung zusammen mit dem Dichtkolben (22) zum Lösen des Eingriffs mit den Spannzangen (15) verschiebbar gelagert ist.

2. Schnellanschlußkupplung nach Anspruch 1,
dadurch gekennzeichnet, daß
eine gemeinsame, auf den Dichtkolben (22) und den Schiebering (40) wirkende Druckfeder (41) vorgesehen ist.

3. Schnellanschlußkupplung nach Anspruch 1 oder 2,
dadurch gekennzeichnet, daß
zwischen dem Dichtkolben (22) und dem Schiebering (40) ein Mitnehmerprofil (50) mit Axialspiel vorgesehen ist.

4. Schnellanschlußkupplung nach einem der Ansprüche 1 bis 3,
dadurch gekennzeichnet, daß
der Dichtkolben (22) an der Außenfläche des Gehäuses (11) geführt und zum Zentrum hin eine Kolben-Ringfläche (22a) vorgesehen ist.

5. Schnellanschlußkupplung nach Anspruch 4,
dadurch gekennzeichnet, daß
die Kolben-Ringfläche (22a) eine größere wirksame Fläche aufweist als die axial gegenüberliegende Dichtfläche (32).

6. Schnellanschlußkupplung nach einem der Ansprüche 1 bis 5,
dadurch gekennzeichnet, daß
der Schiebering (40) auf der Außenfläche des Dichtkolbens (22) geführt ist.

7. Schnellanschlußkupplung nach einem der Ansprüche 1 bis 6,
dadurch gekennzeichnet, daß
zentral im Gehäuse (11) ein Rückschlagventil (25) angeordnet ist.

8. Schnellanschlußkupplung nach Anspruch 4 und 7,
dadurch gekennzeichnet, daß
der Kolben-Ringfläche (22a) ein Ventilstößel (25b) des Rückschlagventiles (25) gegenüberliegt.

## Claims

1. A rapid connection coupling (10) for transferring gaseous and/or liquid fluids, especially for charging coolants in air-conditioning systems, comprising:
- a tubular housing (11);
- an outer sliding sleeve (18) slidably mounted relative to the housing (11);
- a plurality of jaws (15) attached to the housing (11) and which can spread radially, with an engagement profile (17) for connection to a correspondingly formed connection nipple (30); and
- a sealing piston (22) sliding centrally in the housing (11) for engagement on the connection nipple (30);
characterized in that
a spring-biased sliding ring (40) which can slide axially independently is arranged between the sealing piston (22) and the jaws (15) and engages with the jaws (15) in the uncoupled position of the rapid connection coupling (10) and holds them in the open position, and is also slidably mounted to move during the coupling movement together with the sealing piston (22) to free the engagement with the jaws (15).

2. A rapid connection coupling according to claim 1, characterized in that there is provided a common compression spring (41) acting on the sealing piston (22) and the sliding ring (40).

3. A rapid connection coupling according to claim 1 or 2, characterized in that an entraining profile (50) with axial play is provided between the sealing piston (22) and the sliding ring (40).

4. A rapid connection coupling according to any of claims 1 to 3, characterized in that the sealing piston (22) is guided on the outer surface of the housing (11) and a piston annular surface (22a) is provided towards the centre.

5. A rapid connection coupling according to claim 4, characterized in that the piston annular surface (22a) has a greater effective surface than the axially opposed sealing surface (32).

6. A rapid connection coupling according to any of claims 1 to 5, characterized in that the sliding ring (40) is guided on the outer surface of the sealing piston (22).

7. A rapid connection coupling according to any of claims 1 to 6, characterized in that a check valve (25) is provided centrally in the housing (11).

8. A rapid connection coupling according to claim 4 and 7, characterized in that the piston annular surface (22a) is opposite a valve plunger (25b) of the check valve (25).

## Revendications

1. Raccord rapide (10) pour transmettre des fluides gazeux et/ou liquides, en particulier pour remplir des installations de climatisation avec des fluides frigorigènes, comprenant:
- un corps tubulaire (11);
- un manchon extérieur (18) monté coulissant par rapport au corps (11);
- plusieurs pinces de serrage ou mors (15) fixés au corps (11) et pouvant être écartés radialement, qui présentent un profil de prise (17) pour le branchement sur un raccord (30) auquel le raccord rapide (10) est à connecter et qui est pourvu d'une conformation correspondante; et
- un piston d'étanchéité (22) monté coulissant de façon centrale dans le corps (11) et destiné à venir s'appliquer contre le raccord (30);
caractérisé en ce que
une bague coulissante (40), pouvant être déplacée axialement de façon indépendante et chargée par ressort, est disposée entre le piston d'étanchéité (22) et les mors (15), bague coulissante qui attaque les mors (15) et les maintient en position ouverte à la position déconnectée du raccord rapide (10), et qui est montée pour pouvoir être déplacée, lors du mouvement de connexion, ensemble avec le piston d'étanchéité (22), pour libérer les mors (15) et permettre ainsi leur mouvement de prise.

2. Raccord rapide selon la revendication 1, caractérise en ce qu'il comprend un ressort de compression (41) commun, agissant sur le piston d'étanchéité (22) et sur la bague coulissante (40).

3. Raccord rapide selon la revendication 1 ou 2, caractérisé en ce qu'un profil d'entraînement (50) à jeu axial est prévu entre le piston d'étanchéité (22) et la bague coulissante (40).

4. Raccord rapide selon une des revendications 1 à 3, caractérisé en ce que le piston d'étanchéité (22) est guidé sur la surface extérieure du corps (11) et pourvu, en direction du centre, d'une face annulaire (22a).

5. Raccord rapide selon la revendication 4, caractérisé en ce que la face annulaire (22a) du piston représente une plus grande face utile que la face d'étanchéité (32) située axialement de l'autre côté du piston.

6. Raccord rapide selon une des revendications 1 à 5, caractérisé en ce que la bague coulissante (40) est guidée sur la surface extérieure du piston d'étanchéité (22).

7. Raccord rapide selon une des revendications 1 à 6, caractérisé en ce qu'une soupape antiretour (25) est installée au centre à l'intérieur du corps (11).

8. Raccord rapide selon les revendications 4 et 7, caractérisé en ce qu'un poussoir (25b) de la soupape antiretour (25) est situé en regard de la face annulaire (22a) du piston.
